# FASCICULE DE BREVET EUROPEEN

(11) **EP 2 176 770 B1**
(45) Date de publication et mention de la délivrance du brevet: **28.12.2011**
(21) Numéro de dépôt: 08828021.9
(22) Date de dépôt: 30.07.2008
(51) Int. Cl.: G06F 13/10, G06F 1/32, B60K 37/06, B60R 25/00, B60K 37/00, G06F 1/24, G06F 1/26, B60R 16/03

(54) **PROCEDE DE COMMANDE D'UN SYSTEME MULTIMEDIA SUR UN VEHICULE DISPOSITIF POUR SA MISE EN OEUVRE**
VERFAHREN ZUR STEUERUNG EINES MULTIMEDIA-SYSTEMS IN EINEM FAHRZEUG UND VORRICHTUNG ZUM EINSETZEN DIESES SYSTEMS
METHOD FOR CONTROLLING A MULTIMEDIA SYSTEM ON A VEHICLE AND DEVICE FOR IMPLEMENTING SAME

(30) Priorité: 10.08.2007 FR 0705825
(43) Date de publication de la demande: 21.04.2010
(73) Titulaire: Renault S.A.S., 92100 Boulogne-Billancourt (FR)
(72) Inventeur: CONAN, Herve, F-94270 Le Kremlin Bicetre (FR); RIMLINGER, Remi, F-78180 Montigny Le Bretonneux (FR)
(86) Numéro de dépôt international: PCT/FR2008/051429
(87) Numéro de publication internationale: WO 2009/024711

(56) Documents cités:
- EP-A- 1 069 494
- WO-A-02/076794
- WO-A-2004/018249
- DE-B3- 10 330 451
- US-A1- 2004 100 148

## Description

L'invention concerne un procédé et un dispositif de commande d'un système multimédia sur un véhicule automobile.

Un domaine d'application de l'invention est les systèmes multimédias embarqués sur les véhicules automobiles, tels que par exemple les systèmes de navigation de type GPS.

Les systèmes de navigation multimédia ont des interfaces homme-machine de plus en plus évoluées, avec des couches logicielles impliquant un démarrage du système visuel et sonore, de plus en plus lent.

Les fonctions de navigation sont très lentes à démarrer, telles que par exemple l'affichage de la carte et d'un itinéraire en 10 secondes, l'affichage des informations de trafic au bout d'une minute.

Au-delà d'un mauvais ressenti pour l'utilisateur, cette lenteur peut-être particulièrement gênante, lorsque le système multimédia comprend des fonctions liées à l'intégrité du véhicule comme par exemple l'affichage d'une caméra arrière pour alerter de la proximité d'un obstacle.

Etant donné que le nombre de fonctions présentes sur le système multimédia est de plus en plus grand, l'attente de l'utilisateur en terme de rapidité de démarrage est de plus en plus grande.

Un procédé et un dispositif de commande d'un système multimédia sur un véhicule automobile comprenant des caractéristiques des préambules des revendications 1 et 9 sont connus du document DE 103 30 451 B3.

L'invention vise à accélérer le démarrage du système multimédia embarqué sur un véhicule automobile.

A cet effet, un premier objet de l'invention est un procédé de commande d'un système multimédia sur un véhicule automobile comportant au moins un module d'exécution d'une fonction multimédia, ayant au moins un état de fonctionnement commandé par une action de l'utilisateur sur une interface,
caractérisé en ce que
le système multimédia comporte, en plus dudit état de fonctionnement commandé, un état de prédémarrage, dans lequel au moins une tâche prescrite du module ne demandant pas d'action de l'utilisateur est démarrée,
des moyens de détection surveillent la survenance d'un évènement d'ouverture ou de déverrouillage du véhicule,
le module est mis temporairement dans l'état de prédémarrage sur détection dudit évènement,
le module étant apte, lorsqu'il se trouve dans l'état de prédémarrage, à passer dans ledit état de fonctionnement lorsque l'utilisateur agit sur l'interface.

Suivant d'autres caractéristiques de l'invention :
- Au bout d'une durée maximale prescrite du système multimédia dans l'état de prédémarrage sans action sur l'interface ou sans démarrage du moteur du véhicule, le système multimédia passe dans un autre état où il est éteint.
- La durée maximale prescrite de temporisation dans l'état de prédémarrage a une valeur inférieure ou égale à trente minutes, de préférence inférieure à cinq minutes...
- Dans le cas d'un module comprenant un écran, l'état de prédémarrage comprend la mise en veille de l'écran,
- dans le cas d'un module comprenant une liaison sans fil de proximité avec un dispositif mobile, l'état de prédémarrage comprend la synchronisation de la liaison,
- dans le cas d'un module comprenant un dispositif de reconnaissance vocale, l'état de prédémarrage comprend le chargement dans une mémoire vive du système, d'au moins un fichier de phonèmes de reconnaissance vocale depuis une mémoire de stockage de ce fichier de phonèmes,
- dans le cas d'un module comprenant un système d'information sur le trafic routier, l'état de prédémarrage comprend la récupération des informations de trafic ayant été mémorisées à la dernière extinction du module et datant de moins d'une durée prédéterminée,
- dans le cas d'un module de tuner de réception de stations radio, l'état de prédémarrage comprend la scrutation des stations radios reçues et la présélection d'au moins une de ces stations radios reçues,
- dans le cas d'un module comprenant une caméra d'aide au recul du véhicule, l'état de prédémarrage comprend l'allumage de cette caméra et d'un éventuel module de construction d'images à partir des images brutes de la caméra (trajectoire estimée,...),
- dans le cas d'un module comprenant une caméra d'aide au recul du véhicule, l'état de prédémarrage comprend l'allumage de cette caméra et éventuellement du module d'affichage de l'image de la caméra,
- dans le cas d'un module de lecture de supports audio, l'état de prédémarrage comprend la détection des types de fichiers contenus dans le support et les données y associées,
- dans le cas d'un module comprenant un écran, l'état de prédémarrage comprend le pré-réveil de l'écran,
- dans le cas d'un module comprenant une partie amplification audio, l'état de prédémarrage comprend le pré-réveil de la partie amplification audio.
- Le système multimédia comprenant au moins un dispositif de présentation d'informations sous une forme perceptible par l'utilisateur, il est prévu un état de fonctionnement du module comprenant l'envoi d'informations de ce module audit dispositif pour leur présentation à l'utilisateur, l'état de prédémarrage comprenant au moins une tâche d'activation du module avec inactivation du dispositif de présentation d'informations de telle manière qu'il ne présente pas d'informations venant du module.
- L'état de prédémarrage comprend l'initialisation autonome du module.
- L'état de prédémarrage comprend la réception automatique de données externes par un récepteur sans fil du système pour leur utilisation par le module.
- L'état de prédémarrage comprend le chargement automatique, depuis une mémoire de masse dans laquelle elle est stockée, d'au moins une application vers une mémoire vive.
- Le système multimédia comprenant au moins un dispositif de présentation d'informations sous une forme perceptible par l'utilisateur, au moins un module comporte un premier état de fonctionnement correspondant à un état de non utilisation, dans lequel le module n'envoie pas d'informations au dispositif de présentation d'informations pour leur présentation, et un deuxième état de fonctionnement, dans lequel le module envoie des informations audit dispositif pour leur présentation,
il est prévu au moins une interface associée respectivement à chaque module pour faire passer ledit module dans le deuxième état de fonctionnement, et une autre interface de commande de démarrage et d'arrêt du moteur du véhicule,
l'on mémorise dans une mémoire celui des états d'utilisation et de non utilisation qu'avait le module lorsque le moteur du véhicule a été mis à l'arrêt pour la dernière fois,
le module passe de l'état de prédémarrage au premier état de fonctionnement lorsque l'autre interface de commande est actionnée pour le démarrage du moteur avec un état de non utilisation mémorisé comme dernier état dans la mémoire,
le module passe de l'état de prédémarrage au deuxième état de fonctionnement, lorsque son interface associée est actionnée ou lorsque l'autre interface de commande est actionnée pour le démarrage du moteur avec un état d'utilisation mémorisé comme dernier état dans la mémoire,
le module étant apte à passer entre l'un et l'autre des premier et deuxième états de fonctionnement lorsque son interface associée est actionnée.

Un deuxième objet de l'invention est un dispositif de commande d'un système multimédia sur un véhicule automobile pour la mise en oeuvre du procédé de commande tel que décrit ci-dessus, le système multimédia comportant au moins un module d'exécution d'une fonction multimédia, ayant au moins un état de fonctionnement commandé par une action de l'utilisateur sur une interface,
caractérisé en ce qu'il comporte des moyens de détection d'un évènement d'ouverture ou de déverrouillage du véhicule,
une unité de commande du système multimédia, reliée aux moyens de détection et comportant des moyens de commmande du module pour le faire passer temporairement dans l'état de prédémarrage lorsque les moyens de détection ont détecté un évènement d'ouverture ou de déverrouillage, et des moyens de commande d'exécution par le module d'au moins une tâche prescrite ne demandant pas d'action de l'utilisateur est démarrée,
des moyens étant prévus pour faire passer le module de l'état de prédémarrage à l'état de fonctionnement par action sur l'interface.

L'invention sera mieux comprise à la lecture de la description qui va suivre, donnée uniquement à titre d'exemple non limitatif en référence aux dessins annexés, sur lesquels :
- la figure 1 est un schéma montrant différents éléments d'un système multimédia, dans lequel est mis en oeuvre le procédé de commande suivant l'invention,
- la figure 2 est un diagramme d'état d'un système multimédia selon une solution existante,
- la figure 3 est un diagramme d'état du procédé de commande d'un système multimédia suivant un mode de réalisation de l'invention, et
- la figure 4 est synoptique modulaire d'un dispositif de commande pour la mise en oeuvre du procédé suivant l'invention.

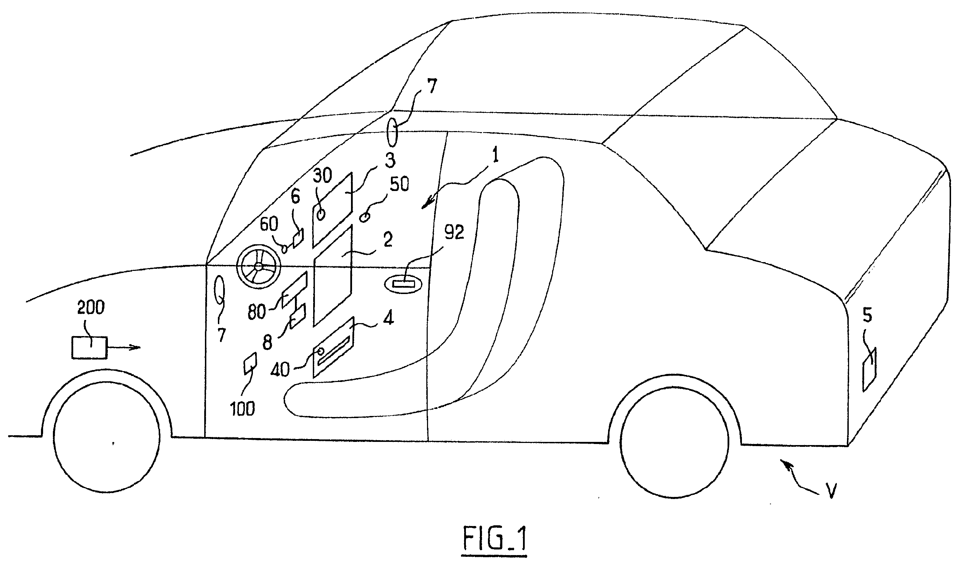

A la figure 1, le véhicule automobile V comporte un système multimédia 1, comprenant par exemple les modules suivants sur la planche de bord (la planche de bord comprenant le tableau de bord avec indication de vitesse):
- un écran 2 d'affichage d'images sur la planche de bord, par exemple pour afficher une carte routière et un itinéraire d'un système 8 de navigation de type GPS,
- un module 3 tuner pour écouter la radio, comportant une interface 30 d'allumage et d'arrêt de celui-ci,
- un lecteur 4 de supports audio amovibles tel par exemple CD et/ou cassettes, comportant une interface 40 pour son allumage et son arrêt,
- une caméra 5 disposée à l'arrière du véhicule V pour l'aide au recul du véhicule, également appelé caméra de parking, associée sur le tableau de bord à une interface 50 pour pouvoir éteindre la visualisation sur l'écran 2 de l'image prise par la caméra 5,
- un module 6 comportant une base de réception d'un téléphone portable ayant une liaison sans fil de proximité (par exemple du type bluetooth, marque déposée), ce module ayant par exemple une interface 60 pour sa mise en marche et son arrêt,
- un ou plusieurs haut-parleurs 7 dans l'habitacle,
- le système de navigation 8 de type GPS, muni éventuellement d'une interface 80 pour son allumage et son arrêt,
- un système vision tête haute, non représenté.

Les interfaces d'allumage et d'arrêt sont par exemple communes en une seule pour tout ce qui est audio (radio, CD, AUX,...). Par conséquent, les interfaces 30, 40, 50, 60, 80 sont aptes à être actionnées par l'utilisateur pour commander le fonctionnement de leur module 3, 4, 5, 6, 8 associé. Elles peuvent être manuelles en étant formées par exemple par des boutons, des touches d'appui ou des manettes, mais peuvent également être réalisées par des commandes vocales. Le ou les haut-parleurs 7 et l'écran 2 forment un dispositif de présentation d'information à l'utilisateur, apte à diffuser les informations envoyées par les modules 3, 4, 5, 6, 8 dans leur état d'utilisation.

Actuellement, certains fournisseurs proposent des démarrages étagés, comme par exemple le son en moins de 2 secondes, le film de démarrage en moins de 4 secondes, la carte en moins de 8 secondes, l'information de trafic et le calcul d'itinéraire en moins de 10 secondes.

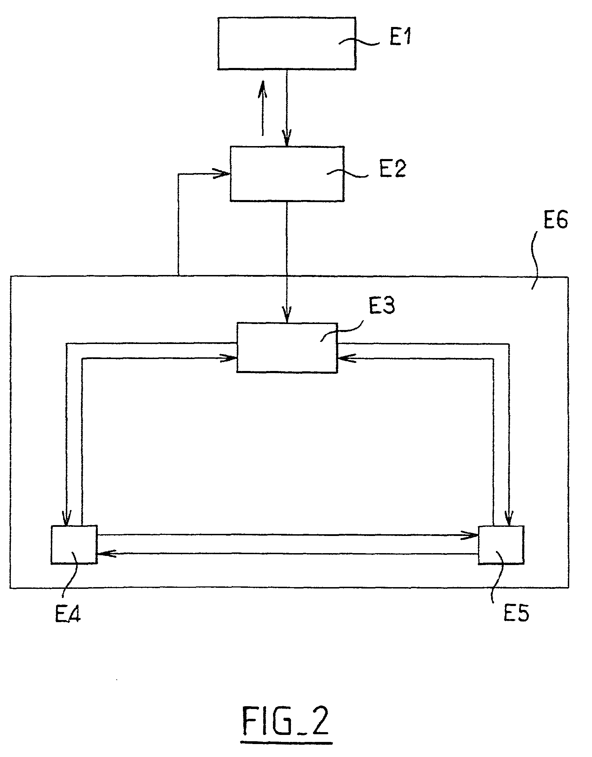

Toutefois, cette solution n'est pas optimale, car elle met encore trop de temps. Dans les systèmes multimédia actuels, le démarrage du système doit se faire complètement pour rendre opérationnelles les fonctions du système. Le diagramme de la figure 2 présente les transitions nécessaires pour activer et éteindre le système selon une solution connue.

A la figure 2, le système multimédia 1 comporte les différents états de fonctionnement suivants :
- un état E1 d'absence d'alimentation en énergie par la batterie 200 du véhicule,
- un état E2 d'arrêt en étant alimenté en énergie par la batterie 200 du véhicule V,
- un état E3 d'attente,
- un premier E4 de fonctionnement commandé indirectement par une action de l'utilisateur sur une interface de commande générale 100, correspondant à un état de non utilisation d'un module,
- un deuxième état E5 de fonctionnement commandé, correspondant à un état d'utilisation d'un module.

Le système 1 passe de l'état E1 à l'état E2 lorsque la batterie du véhicule est connectée à celui-ci pour l'alimenter en électricité.

Le système de démarrage du véhicule V, représenté schématiquement par la référence 100 à la figure 1, forme également une interface par laquelle l'utilisateur peut agir sur le véhicule pour démarrer son moteur. Cette interface 100 est par exemple formée de manière classique par un bouton de démarrage et d'arrêt (START/STOP) ou en tourant une clé dans un système de démarrage, ou par tout autre système.

Dans l'état E3 d'attente, une unité 110 de commande du système 1 surveille si l'utilisateur actionne l'interface 100 de démarrage du véhicule ou l'une des interfaces 30, 40, 50, 60, 80 associée au module 3, 4, 5, 6, 8, ces interfaces étant reliées à l'unité 110.

Lorsque l'utilisateur actionne l'une des interfaces 30, 40, 50, 60, 80 associée respectivement au module 3, 4, 5, 6, 8, le module passe de l'état d'attente E3 à l'état de fonctionnement E5.

Le système 1 comporte une mémoire 90 reliée à l'unité 110 et mémorisant celui des états d'utilisation et de non utilisation en vigueur sur le module lorsque le moteur du véhicule a été mis à l'arrêt par l'interface 100. L'état d'utilisation correspond à l'affichage d'une image sur l'écran 2 et/ou l'émission d'un son sur le ou les haut-parleurs 7 depuis le module 3, 4, 5, 6, 8. Au contraire, l'état de non utilisation correspond au fait que le module se trouvant précédemment dans l'état d'utilisation a été éteint par l'utilisateur par action sur son interface associée et n'envoie plus d'informations à l'écran 2 ni aux haut-parleurs 7.

Le module passe de l'état E3 à l'état E4 lorsque à la fois le dernier état mémorisé dans la mémoire 90 du système 1 est un état de non utilisation du module et lorsque l'interface 100 de commande générale du véhicule a été actionnée.

Le module passe de l'état E3 à l'état E5 également lorsque l'utilisateur a actionné l'interface 100 et lorsque le dernier état mémorisé dans la mémoire 90 était un état d'utilisation du module.

Dans l'état E4 ou E5, lorsque l'interface 30, 40, 50, 60, 80 associée au module 3, 4, 5, 6, 8 est actionnée, le module passe à l'état E5 ou E4.

Ainsi les états E3, E4, et E5 correspondent à un état E6 d'allumage général du système 1. De cet état E6, le système 1 peut retourner dans l'état E2 par tout moyen approprié.

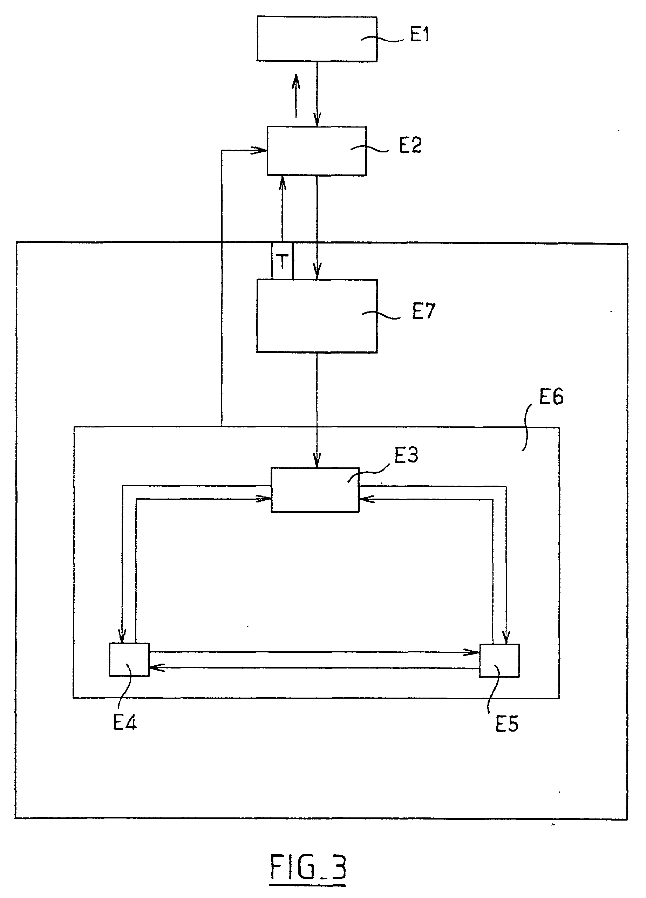

Suivant l'invention, à la figure 3, il est prévu un état E7 de prédémarrage du système multimédia 1, par lequel le module doit passer pour passer de l'état E2 à l'état E6, c'est-à-dire E3, E4 ou E5.

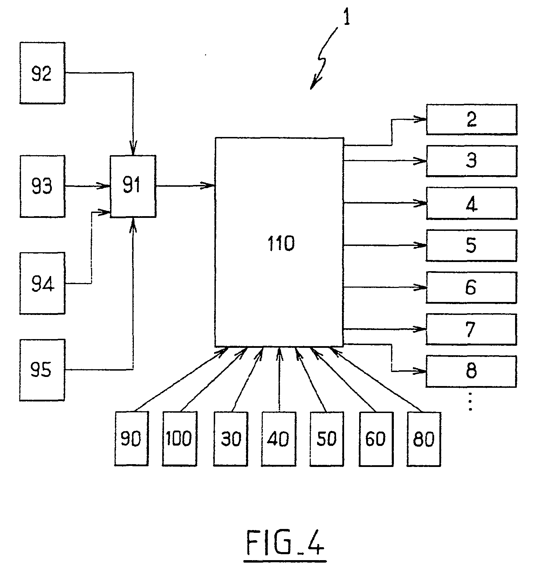

Un système 91 de détection d'ouverture ou de déverrouillage du véhicule est prévu sur celui-ci. Le déverrouillage du véhicule peut correspondre à sa décondamnation par exemple à distance à l'aide d'un transpondeur 93 ou autre pour permettre à l'utilisateur d'ouvrir les portières par leur poignée 92. Le déverrouillage peut également correspondre à une action mécanique sur l'une des portières en tournant une clé 95 dans celle-ci, ce déverrouillage permettant alors à l'une quelconque des portières d'être ouverte en actionnant sa poignée 92. L'ouverture du véhicule correspond à une ouverture d'une portière en actionnant sa poignée 92 si le véhicule n'est pas condamné ou verrouillé. Le déverrouillage peut également avoir lieu par un système de carte main libre, symbolisé par la référence 94 à la figure 4, prévu sur une ou plusieurs des poignées 92 des portières et coffre, par lequel la ou les portières du véhicule sont déverrouillées en mettant la main autour de la poignée 92. Ce système 91 constitue par exemple un système pour détecter une action d'ouverture au moins partielle d'au moins une serrure de portière du véhicule, une ouverture partielle correspondant à un déverrouillage ou à une décondamnation, une ouverture totale correspondant à l'ouverture d'une portière.

Dans l'état E7 de prédémarrage, l'unité 110 commande l'exécution de tâches prescrites par les modules.

Cet état intermédiaire E7 de prédémarrage est activé automatiquement par l'unité 110 de commande lorsque le système 91 de détection indique qu'une portière du véhicule a été ouverte ou que le véhicule a été déverrouillé.

L'état E7 de prédémarrage est associé à un dispositif de temporisation suivant une durée maximale prescrite T pendant laquelle le système multimédia 1 peut se trouver dans cet état E7 depuis la détection de l'évènement d'ouverture ou de déverrouillage du véhicule.

Si, au bout de cette durée maximale T prescrite dans l'état E7 de prédémarrage, aucune interface 30, 40, 50, 60, 80 des modules 3, 4, 5, 6, 8 n'a été actionnée par l'utilisateur et si l'interface 100 de démarrage du moteur du véhicule n'a pas non plus été actionné par l'utilisateur, le système multimédia 1 retourne dans l'état E2.

Lorsque le système 1 se trouve dans l'état E7 de prédémarrage et que l'interface 100 ou l'une des interfaces 30, 40, 50, 60, 80 associées respectivement aux modules 3, 4, 5, 6, 8 est actionnée par l'utilisateur, le système 1 et les modules associés passent de cet état E7 de prédémarrage à l'état E6 de fonctionnement, c'est-à-dire E3, E4 ou E5 selon le cas, ainsi que décrit ci-dessus. Par conséquent, le système 1 ne peut passer de l'état E2 d'arrêt à l'état de fonctionnement commandé E4 ou E5 qu'en passant par l'état E7 de prédémarrage.

Cette durée maximale prescrite T de temporisation dans l'état E7 de prédémarrage est par exemple de quelques minutes, notamment 2 minutes environ. Un cas d'usage de cette temporisation pour passer de l'état E7 à l'état E2 peut être celui de l'utilisateur qui ouvre puis referme son véhicule sans avoir démarrer le moteur ou celui de l'utilisateur qui ouvre son véhicule et s'installe sans démarrer le système multimédia, ni le véhicule.

Le système multimédia 1 profite de l'état E7 de prédémarrage pour exécuter sous la commande de l'unité 110 certaines tâches comme par exemple ouvrir certaines applications. Dans l'état E7 de prédémarrage, le son venant du système multimédia 1 n'est pas audible sur les haut-parleurs 7 et l'écran 2 est éteint, afin de minimiser la consommation d'énergie électrique. Pour un système multimédia 1 équipé d'une mémoire de masse telle que par exemple un disque dur, cette mémoire de masse est par exemple mise en marche dans l'état E7...

Dans un mode de réalisation, le processeur, la mémoire, la lecture et l'écriture de la configuration à afficher sur l'écran 2 ou à faire écouter sur les haut-parleurs 7 sont activés durant l'état E7 de prédémarrage. Durant cet état E7 de prédémarrage, des tâches peuvent être également effectuées pour accélérer la réception de données externes au système, par exemple sur le tuner radio 3, le tuner du système 8 de navigation de type GPS, la caméra 5 de recul.

On décrit ci-dessous des cas d'utilisation du prédémarrage.

Dans un premier cas, l'utilisateur est en communication sur son téléphone portable, entre dans son véhicule puis appuie sur l'interface 60. Son téléphone ayant déjà été synchronisé avec le module 6 par appairage lors de l'état E7 de prédémarrage, le son du téléphone est quasiment immédiatement reçu dans les haut-parleurs 7 du véhicule et l'appel est affiché comme étant en cours sur l'écran 2 après l'appui sur l'interface 60, sans coupure d'appel, ce qui laisse l'utilisateur poser son téléphone sur la base de support du module 6 lorsque celle-ci est prévue.

Dans un deuxième cas, le véhicule est garé dans un emplacement présentant un obstacle à l'arrière, par exemple un poteau ou un autre véhicule très proche à l'arrière. Lorsque le système se trouve dans l'état E7 de prédémarrage à l'arrêt du véhicule, le film d'accueil passé habituellement sur l'écran 2 et les haut-parleurs 7 au démarrage du système peut être coupé à tout moment pour afficher la vue prise par la caméra 5 arrière, afin par exemple de donner une meilleure compréhension des alertes sonores ayant pu être émises pour avertir de la présence d'un obstacle arrière.

Dans un troisième cas, si le système possède un mode de récupération rapide des informations de trafic en par exemple moins de 10 secondes via un canal numérique à débit élevé, par exemple de type DAB+, SDARS, DRM, télématique, le calcul d'itinéraire vers la destination précédente ou une destination du carnet d'adresses se fera systématiquement en prenant en compte l'information de trafic en calculant un nouvel itinéraire. La position du véhicule est recalculée par le module 8 de navigation lors de l'état E7 de prédémarrage.

Par exemple, pour de problèmes de consommation d'énergie électrique, l'état E7 de prédémarrage a une temporisation inférieure ou égale à 5 minutes.

Les tâches exécutées dans l'état E7 de prédémarrage comprennent par exemple l'une et/ou l'autre des suivantes ;
- dans le cas d'un système multimédia 1 équipé d'un dispositif de reconnaissance vocale et d'un microphone pour pouvoir adresser des commandes vocales au système, les fichiers de phonèmes nécessaires à la reconnaissance vocale sont chargés depuis une mémoire de masse dans une mémoire vive.
- dans le cas où le module 6 sert à recevoir un téléphone portable ayant une liaison sans fil de proximité (par exemple du type bluetooth, marque déposée), cette liaison entre le téléphone et le module 6 est synchronisée, dans le cas où le téléphone a été préalablement déclaré et allumé.
- dans le cas du module 8 comprenant un système d'information sur le trafic routier, les informations de trafic ayant été mémorisées à la dernière extinction et qui, d'après leur information d'horodatage, datent de moins d'une durée prédéterminée, par exemple de l'ordre de quelques minutes, notamment de 15 minutes environ, sont récupérées par le module 8, pour pouvoir, lorsqu'il est passé à l'un des états E4 ou E5, ou globalement E6, être rapidement affichées sur l'écran 2 ou annoncées sur les haut-parleurs 7. Ces tâches peuvent être très utiles en cas d'arrêt court du véhicule, par exemple à une station d'approvisionnement en carburant.

- dans le cas du module tuner radio 3, on scrute les stations de radio disponibles en réception par exemple pour présélectionner les stations ayant déjà été mémorisées par l'utilisateur. Cette scrutation et cette présélection peut être effectuées par exemple sur les stations de radio diffusant un certain type technique d'informations comme celles de type RDS-TMC pour la diffusion d'informations de trafic, afin de commencer à recevoir ces informations de trafic, le taux de transfert des informations de type TMC pouvant être lent à environ un évènement par seconde. Le canal radio des stations peut être également évolué, en étant par exemple de type DAB+, DRM, SDARS, DMB,...
- dans le cas de la ou des caméras 5 de proximité, celle-ci est réveillée, ainsi que l'éventuel module d'affichage associé.
- dans le cas du système audio des haut-parleurs 7, les paramètres audio sont chargés.
- dans le cas d'une lecture de supports audio tel que par exemple CD (MP3, WMA, ...) la lecture est commandée pour détecter les types de fichiers contenus et les données associées, et permettre une sortie sonore immédiate lors du passage en E6.
- pré-réveil de l'écran, notamment pour le cas où celui-ci comprend des modules de gestion d'affichage.
- pré-réveil de la partie amplification audio.

Lorsque le système quitte l'état E7 de prédémarrage pour passer dans l'état de fonctionnement E4 ou E5, globalement E6, les tâches ayant été préalablement effectuées durant l'état E7 de prédémarrage permettront de gagner du temps entre le moment où l'utilisateur actionnera l'une des interfaces et le moment où le ou les modules actionnés seront en état de fonctionnement pour l'utilisateur, c'est-à-dire dans le mode de réalisation ci-dessus, jusqu'au moment où l'écran sera réveillé, ainsi que la partie amplification audio, pour pouvoir afficher l'image imposée par le ou les modules ayant été actionnés et diffuser le son imposé par le ou les modules ayant été actionnés. L'utilisateur aura alors l'impression d'un démarrage visuel et sonore quasi immédiat.

## Revendications

1. Procédé de commande d'un système multimédia (1) sur un véhicule automobile comportant au moins un module (3, 4, 5, 6, 8) d'exécution d'une fonction multimédia, ayant au moins un état (E4, E5) de fonctionnement commandé par une action de l'utilisateur sur une interface (30, 40, 50, 60, 80, 100),
le système multimédia (1) comportant, en plus dudit état (E4, E5) de fonctionnement commandé, un état (E7) de prédémarrage, dans lequel au moins une tâche prescrite du module (3, 4, 5, 6, 8) ne demandant pas d'action de l'utilisateur est démarrée,
des moyens (91) de détection surveillant la survenance d'un évènement d'ouverture ou de déverrouillage du véhicule,
le module (3, 4. 5, 6, 8) étant mis temporairement dans l'état (E7) de prédémarrage sur détection dudit événement,
le module (3, 4, 5, 6, 8) étant apte, lorsqu'il se trouve dans l'état (E7) de prédémarrage, à passer dans ledit état (E4, E5) de fonctionnement lorsque l'utilisateur agit sur l'interface (30, 40, 50, 60, 80, 100),
**caractérisé en ce que** ie système multimédia comprend au moins un dispositif (2, 7) de présentation d'informations sous une forme perceptible par l'utilisateur, il est prévu un état (E5) de fonctionnement du module comprenant l'envoi d'informations de ce module audit dispositif (2, 7) pour leur présentation à l'utilisateur, l'état (E7) de prédémarrage comprenant au moins une tâche d'activation du module (3, 4, 5, 6, 8) avec inactivation du dispositif (2, 7) de présentation d'informations de telle manière qu'il ne présente pas d'informations venant du module.

2. Procédé de commande suivant la revendication 1, **caractérisé en ce que** qu'au bout d'une durée maximale prescrite (T) du système multimédia (1) dans l'état (E7) de prédémarrage sans action sur l'interface (30, 40, 50, 60, 80, 100) ou sans démarrage du moteur du véhicule, le système multimédia (1) passe dans un autre état (E2) où il est éteint.

3. Procédé de commande suivant la revendication 2, **caractérisé en ce que** la durée maximale prescrite (T) de temporisation dans l'état (E7) de prédémarrage a une valeur inférieure ou égale à trente minutes, de préférence inférieure à cinq minutes.

4. Procédé suivant l'une quelconque des revendications précédentes, **caractérisé en ce que**
dans le cas d'un module comprenant un écran (2), l'état (E7) de prédémarrage comprend la mise en veille de l'écran (2),
- dans le cas d'un module (6) comprenant une liaison sans fil de proximité avec un dispositif mobile, l'état (E7) de prédémarrage comprend la synchronisation de la liaison,
- dans le cas d'un module (8) comprenant un dispositif de reconnaissance vocale, l'état (E7) de prédémarrage comprend le chargement dans une mémoire vive du système, d'au moins un fichier de phonèmes de reconnaissance vocale depuis une mémoire de stockage de ce fichier de phonèmes,
- dans le cas d'un module (8) comprenant un système d'information sur le trafic routier, l'état (E7) de prédémarrage comprend la récupération des informations de trafic ayant été mémorisées à la dernière extinction du module (8) et datant de moins d'une durée prédéterminée,
- dans le cas d'un module (3) de tuner de réception de stations radio, l'état (E7) de prédémarrage comprend la scrutation des stations radios reçues et la présélection d'au moins une de ces stations radios reçues,
- dans le cas d'un module (5) comprenant une caméra d'aide au recul du véhicule, l'état (E7) de prédémarrage comprend l'allumage de cette caméra (5) et éventuellement du module d'affichage de l'image de la caméra,
- dans le cas d'un module de lecture de supports audio, l'état (E7) de prédémarrage comprend la détection des types de fichiers contenus dans le support et les données y associées,
- dans le cas d'un module comprenant un écran (2), l'état (E7) de prédémarrage comprend le pré-réveil de l'écran,
dans le cas d'un module comprenant une partie amplification audio, l'état (E7) de prédémarrage comprend le pré-réveil de la partie amplification audio.

5. Procédé de commande suivant l'une quelconque des revendications précédentes, **caractérisé en ce que** l'état (E7) de prédémarrage comprend l'initialisation autonome du module (3, 4, 5, 6, 8).

6. Procédé de commande suivant l'une quelconque des revendications précédentes, **caractérisé en ce que** l'état (E7) de prédémarrage comprend la réception automatique de données externes par un récepteur sans fil du système (1) pour leur utilisation par le module (3, 4, 5, 6, 8).

7. Procédé de commande suivant l'une quelconque des revendications précédentes, **caractérisé en ce que** l'état (E7) de prédémarrage comprend le chargement automatique, depuis une mémoire de masse dans laquelle elle est stockée, d'au moins une application vers une mémoire, vive.

8. Procédé de commande suivant l'une quelconque des revendications précédentes, **caractérisé en ce que** le système multimédia, comprenant au moins une dispositif (2, 7) de présentation d'informations sous une forme perceptible par l'utilisateur, au moins un module (3, 4, 5, 6, 8) comporte un premier état (E4) de fonctionnement correspondant à un état de non utilisation, dans lequel le module (3, 4, 5, 6, 8) n'envoie pas d'informations au dispositif (2, 7) de présentation d'informations pour leur présentation, et un deuxième état (E5) de fonctionnement, dans lequel le module (3, 4, 5, 6, 8.) envoie des informations audit dispositif (2, 7) pour leur présentation, il est prévu au moins une interface (30, 40., 50, 60, 80) associée respectivement à chaque module (3, 4, 5, 6, 8) pour faire passer ledit module dans le deuxième état (E5) de fonctionnement, et une autre interface (100) de commande de démarrage et d'arrêt du moteur du véhicule, l'on mémorise dans une mémoire (90) celui des états d'utilisation et de non utilisation qu'avait le module (3, 4, 5, 6, 8) lorsque le moteur du véhicule a été mis à l'arrêt pour la dernière fois, le module (3, 4, 5, 6, 8) passe de l'état (E7) de prédémarrage au premier état (E4) de fonctionnement lorsque l'autre interface (100) de commande est actionnée pour le démarrage du moteur avec une état de non utilisation mémorisé comme dernier état dans la mémoire (90), le module (3, 4, 5, 6, 8) passe de l'état (E7) de prédémarrage au deuxième état (E5) de fonctionnement, lorsque son interface associée (30, 40, 50, 60, 80) est actionnée ou lorsque l'autre interface (100) de commande est actionnée pour le démarrage du moteur avec un état d'utilisation mémorisé comme dernier état dans la mémoire (90), le module étant apte à passer entre l'un et l'autre des premier et deuxième états (E4, E5) de fonctionnement lorsque son interface associée (30, 40,50, 60, 80) est actionnée.

9. Dispositif de commande d'un système multimédia (1) sur un véhicule automobile pour la mise en oeuvre du procédé de commande suivant l'une quelconque des revendications précédentes, le système multimédia (1) comportant au moins un module (3, 4, 5, 6, 8) d'exécution d'une fonction multimédia, ayant au moins un état (E4, E5) de fonctionnement commandé par une action de l'utilisateur sur une interface (30, 40, 50, 60, 80, 100), comportant des moyens (91) de détection d'un événement d'ouverture ou de déverrouillage du véhicule, une unité (110) de commande du système multimédia (1), reliée aux moyens (91) de détection et comportant des moyens de commande du module (3, 4, 5, 6, 8) pour le faire passer temporairement dans l'état (E7) de prédémarrage lorsque les moyens (91) de détection ont détecté un événement d'ouverture ou de déverrouillage, et des moyens de commande d'exécution par le module (3, 4, 5, 6, 8) d'au moins une tâche prescrite ne demandant pas d'action de l'utilisateur est démarrée, des moyens étant prévus pour faire passer le module (3, 4, 5, 6, 8) de l'état de prédémarrage à l'état (E4, E5) de fonctionnement par action sur l'interface (30, 40, 50, 60, 80, 100), **caractérisé en ce que** le système multimédia comprend au moins un dispositif (2, 7) de présentation d'informations sous une forme perceptible par l'utilisateur, dans lequel il est prévu un état (E5) de fonctionnement du module comprenant l'envoi d'informations de ce module audit dispositif (2, 7) pour leur présentation à l'utilisateur, l'état (E7) de prédémarrage comprenant au moins une tâche d'activation du module (3, 4, 5, 6, 8) avec inactivation du dispositif (2, 7) de présentation d'informations de telle manière qu'il, ne présente pas d'informations venant du module.

## Claims

1. Method for controlling a multimedia system (1) on an automobile comprising at least one module (3, 4, 5, 6, 8) for executing a multimedia function, having at least one operation state (E4, E5) controlled by an action of the user on an interface (30, 40, 50, 60, 80, 100),
the multimedia system (1) including, in addition to said controlled operation state (E4, E5), a prestart state (E7), wherein at least one prescribed task of the module (3, 4, 5, 6, 8) that does not require any action by the user is initiated,
detection means (91) monitoring the occurrence of a vehicle opening or unlocking event,
the module (3, 4, 5, 6, 8) being temporarily set to the prestart state (E7) following the detection of said event,
the module (3, 4, 5, 6, 8) being capable, when in the prestart state (E7), of switching to said operation state (E4, E5) when the user acts on the interface (30, 40, 50, 60, 80, 100),
**characterized in that** the multimedia system comprises at least one device (2, 7) for presenting information in a form that can be perceived by the user, there is provided an operation state (E5) of the module that includes the sending of information from this module to said device (2, 7) so that it can be presented to the user, the prestart state (E7) including at least one task for activating the module (3, 4, 5, 6, 8) with deactivation of the information presentation device (2, 7) so that it does not present information coming from the module.

2. Control method according to Claim 1, **characterized in that**, after a prescribed maximum duration (T) of the multimedia system (1) in the prestart state (E7) with no action on the interface (30, 40, 50, 60, 80, 100) or without the engine of the vehicle being started, the multimedia system (1) switches to another state (E2)in which it is switched off.

3. Control method according to Claim 2, **characterized in that** the prescribed maximum timer duration (T) in the prestart state (E7) has a value less than or equal to thirty minutes, preferably less than five minutes.

4. Method according to any one of the preceding claims, **characterized in that**
- in the case of a module comprising a screen (2), the prestart state (E7) includes switching the screen (2) to standby mode,
- in the case of a module (6) comprising a local wireless link with a mobile device, the prestart state (E7) includes the synchronization of the link,
- in the case of a module (8) comprising a voice recognition device, the prestart state (E7) includes the loading into a RAM memory of the system, of at least one voice recognition phonemes file from a memory storing this phonemes file,
- in the case of a module (8) comprising a road traffic information system, the prestart state (E7) includes the recovery of the traffic information stored the last time the module (8) was switched off and dating from less than a predetermined duration,
- in the case of a radio station reception tuner module (3), the prestart state (E7) includes the scanning of the received radio stations and the preselection of at least one of these received radio stations,
- in the case of a module (5) comprising a vehicle reversing assistance camera, the prestart state (E7) includes the switching on of this camera (5) and possibly of the module displaying the image from the camera,
- in the case of an audio media playback module, the prestart state (E7) includes the detection of the file types contained in the medium and the data associated therewith,
- in the case of a module comprising a screen (2), the prestart state (E7) includes the pre-reawakening of the screen,
- in the case of a module comprising an audio amplification portion, the prestart state (E7) includes the pre-reawakening of the audio amplification portion.

5. Control method according to anyone of the preceding claims, **characterized in that** the prestart state (E7) includes the independent initialization of the module (3, 4, 5, 6, 8).

6. Control method according to anyone of the preceding claims, **characterized in that** the prestart state (E7) includes the automatic reception of external data by a wireless receiver of the system (1) so that said data can be used by the module (3, 4, 5, 6, 8).

7. Control method according to anyone of the preceding claims, **characterized in that** the prestart state (E7) includes the automatic loading, from a mass memory in which it is stored, of at least one application to a RAM memory.

8. Control method according to anyone of the preceding claims, **characterized in that**, the multimedia system comprising at least one device (2, 7) for presenting information in a form that can be perceived by the user, at least one module (3, 4, 5, 6, 8) includes a first operation state (E4) corresponding to a state of non-use, in which the module (3, 4, 5, 6, 8) does not send information to the information presentation device (2, 7) so it can be presented, and a second operation state (E5), wherein the module (3, 4, 5, 6, 8) sends information to said device (2, 7) so that it can be presented, there is provided at least one interface (30, 40, 50, 60, 80) respectively associated with each module (3, 4, 5, 6, 8) to switch said module to the second operation state (E5), and another interface (100) for controlling the starting and stopping of the engine of the vehicle, the state of use or non-use that the module (3, 4, 5, 6, 8) had when the engine of the vehicle was last stopped is stored in a memory (90), the module (3, 4, 5, 6, 8) switches from the prestart state (E7) to the first operation state (E4) when the other control interface (100) is actuated to start the engine with a state of non-use stored as the last state in the memory (90), the module (3, 4, 5, 6, 8) switches from the prestart state (E7) to the second operation state (E5) when its associated interface (30, 40, 50, 60, 80) is actuated or when the other control interface (100) is actuated to start the engine with a state of use stored as the last state in the memory (90), the module being capable of switching between one and the other of the first and second operation states (E4, E5) when its associated interface (30, 40, 50, 60, 80) is actuated.

9. Device for controlling a multimedia system (1) on an automobile to implement the control method according to any one of the preceding claims, the multimedia system (1) comprising at least one module (3, 4, 5, 6, 8) for executing a multimedia function, having at least one operation state (E4, E5) controlled by an action of the user on an interface (30, 40, 50, 60, 80, 100), comprising means (91) of detecting a vehicle opening or unlocking event, a unit (110) for controlling the multimedia system (1), linked to the detection means (90) and including means of controlling the module (3, 4, 5, 6, 8) to temporarily switch it to the prestart state (E7) when the detection means (91) have detected an opening or unlocking event, and means of controlling the execution by the module (3, 4, 5, 6, 8) of at least one prescribed task that does not require any action by the user is initiated, means being provided to switch the module (3, 4, 5, 6, 8) from the prestart state to the operation state (E4, E5) by action on the interface (30, 40, 50, 60, 80, 100),
**characterized in that** the multimedia system comprises at least one device (2, 7) for presenting information in a form that can be perceived by the user, wherein there is provided an operation state (E5) of the module that includes the sending of information from this module to said device (2, 7) so that it can be presented to the user, the prestart state (E7) including at least one task for activating the module (3, 4, 5, 6, 8) with deactivation of the information presentation device (2, 7) so that it does not present information coming from the module.

## Patentansprüche

1. Verfahren zum Steuern eines Multimediasystems (1) in einem Kraftfahrzeug mit mindestens einem Modul (3, 4, 5, 6, 8) zur Ausführung einer Multimediafunktion, das mindestens einen Betriebszustand (E4, E5) aufweist, der durch eine Einwirkung des Benutzers an einer Schnittstelle (30, 40, 50, 60, 80, 100) gesteuert wird,
wobei das Multimediasystem (1) zusätzlich zu dem gesteuerten Betriebszustand (E4, E5) einen Vorstartzustand (E7) umfasst, in dem mindestens eine vorgeschriebene Aufgabe des Moduls (3, 4, 5, 6, 8), die keine Einwirkung des Benutzers erfordert, gestartet wird,
wobei Detektionsmittel (91) das Auftreten eines Öffnungs- oder Entriegelungsereignisses des Fahrzeugs überwachen,
wobei das Modul (3, 4, 5, 6, 8) bei der Detektion des Ereignisses vorübergehend in den Vorstartzustand (E7) gesetzt wird,
wobei das Modul (3, 4, 5, 6, 8), wenn es sich im Vorstartzustand (E7) befindet, in den Betriebszustand (E4, E5) übergehen kann, wenn der Benutzer auf die Schnittstelle (30, 40, 50, 60, 80, 100) einwirkt,
**dadurch gekennzeichnet, dass** das Multimediasystem mindestens eine Vorrichtung (2, 7) zur Darstellung von Informationen in einer für den Benutzer erkennbaren Form umfasst, ein Betriebszustand (E5) des Moduls vorgesehen ist, der das Senden von Informationen von diesem Modul zur Vorrichtung (2, 7) für ihre Darstellung für den Benutzer umfasst, wobei der Vorstartzustand (E7) mindestens eine Aufgabe zur Aktivierung des Moduls (3, 4, 5, 6, 8) mit Inaktivierung der Vorrichtung (2, 7) zur Darstellung von Informationen, so dass sie keine Informationen darstellt, die vom Modul stammen, umfasst.

2. Steuerverfahren nach Anspruch 1, **dadurch gekennzeichnet, dass** nach einer vorgeschriebenen maximalen Dauer (T) des Multimediasystems (1) im Vorstartzustand (E7) ohne Einwirkung auf die Schnittstelle (30, 40, 50, 60, 80, 100) oder ohne Start des Motors des Fahrzeugs das Multimediasystem (1) in einen anderen Zustand (E2) übergeht oder ausgeschaltet wird.

3. Steuerverfahren nach Anspruch 2, **dadurch gekennzeichnet, dass** die vorgeschriebene maximale Verweildauer (T) im Vorstartzustand (E7) einen Wert aufweist, der kleiner als oder gleich dreißig Minuten, vorzugsweise kleiner als fünf Minuten ist.

4. Verfahren nach einem der vorangehenden Ansprüche, **dadurch gekennzeichnet, dass**
- im Fall eines Moduls mit einem Bildschirm (2) der Vorstartzustand (E7) umfasst, dass der Bildschirm (2) in Bereitschaft gesetzt wird,
- im Fall eines Moduls (6) mit einer drahtlosen Nahverbindung mit einer mobilen Vorrichtung der Vorstartzustand (E7) die Synchronisation der Verbindung umfasst,
- im Fall eines Moduls (8) mit einer Spracherkennungsvorrichtung der Vorstartzustand (E7) das Laden mindestens einer Datei von Spracherkennungsphonemen aus einem Ablagespeicher für diese Datei von Phonemen in einen Arbeitsspeicher des Systems umfasst,
- im Fall eines Moduls (8) mit einem System von Informationen über den Straßenverkehr der Vorstartzustand (E7) das Abrufen von Verkehrsinformationen umfasst, die beim letzten Ausschalten des Moduls (8) gespeichert wurden und von weniger als einer Vorbestimmten Dauer stammen,
- im Fall eines Moduls (3) zum Abstimmen des Empfangs von Radiostationen der Vorstartzustand (E7) die Abfrage der empfangenen Radiostationen und die Vorauswahl von mindestens einer dieser empfangenen Radiostationen umfasst,
- im Fall eines Moduls (5) mit einer Kamera zur Unterstützung des Rückwärtsfahrens des Fahrzeugs der Vorstartzustand (E7) das Einschalten dieser Kamera (5) und eventuell des Moduls zur Anzeige des Bildes der Kamera umfasst,
- im Fall eines Moduls zum Lesen von Audioträgern der Vorstartzustand (E7) die Detektion der Typen von Dateien, die im Träger enthalten sind, und der diesen zugeordneten Daten umfasst,
- im Fall eines Moduls mit einem Bildschirm (2) der Vorstartzustand (E7) das vorherige Aufwecken des Bildschirms umfasst,
- im Fall eines Moduls mit einem Audioverstärkungsteil der Vorstartzustand (E7) das vorherige Aufwecken des Audioverstärkungsteils umfasst.

5. Steuerverfahren nach einem der vorangehenden Ansprüche, **dadurch gekennzeichnet, dass** der Vorstartzustand (E7) die eigenständige Initialisierung des Moduls (3, 4, 5, 6, 8) umfasst.

6. Steuerverfahren nach einem der vorangehenden Ansprüche, **dadurch gekennzeichnet, dass** der Vorstartzustand (E7) den automatischen Empfang von externen Daten durch einen drahtlosen Empfänger des Systems (1) für ihre Verwendung durch das Modul (3, 4, 5, 6, 8) umfasst.

7. Steuerverfahren nach einem der vorangehenden Ansprüche, **dadurch gekennzeichnet, dass** der Vorstartzustand (E7) das automatische Laden mindestens einer Abwendung von einem Massenspeicher, in dem sie gespeichert ist, in einen Arbeitsspeicher umfasst.

8. Steuerverfahren nach einem der vorangehenden Ansprüche, **dadurch gekennzeichnet, dass** das Multimediasystem mindestens eine Vorrichtung (2, 7) zur Darstellung von Informationen in einer für den Benutzer erkennbaren Form umfasst, mindestens ein Modul (3, 4, 5, 6, 8) einen ersten Betriebszustand (E4), der einem Nicht-Verwendungs-Zustand entspricht, in dem das Modul (3, 4, 5, 6, 8) keine Informationen zur Vorrichtung (2, 7) zur Darstellung von Informationen für ihre Darstellung sendet, und einen zweiten Betriebszustand (E5), in dem das Modul (3, 4, 5, 6, 8) Informationen zur Vorrichtung (2, 7) für ihre Darstellung sendet, umfasst, mindestens eine Schnittstelle (30, 40, 50, 60, 80), die jeweils jedem Modul (3, 4, 5, 6, 8) zugeordnet ist, um das Modul in den zweiten Betriebszustand (E5) zu versetzen, und eine weitere Schnittstelle (100) zur Steuerung des Starts und des Stopps des Motors des Fahrzeugs vorgesehen sind, in einem Speicher (90) jener der Verwendungs- und Nicht-Verwendungs-Zustände gespeichert wird, den das Modul (3, 4, 5, 6, 8) hatte, als der Motor des Fahrzeugs das letzte Mal gestoppt wurde, das Modul (3, 4, 5, 6, 8) vom Vorstartzustand (E7) in den ersten Betriebszustand (E4) übergeht, wenn die weitere Steuerschnittstelle (100) für den Start des Motors betätigt wird, wenn ein Nicht-Verwendungs-Zustand als letzter Zustand im Speicher (90) gespeichert ist, das Modul (3, 4, 5, 6, 8) vom Vorstartzustand (E7) in den zweiten Betriebszustand (E5) übergeht, wenn seine zugehörige Schnittstelle (30, 40, 50, 60, 80) betätigt wird oder wenn die weitere Steuerschnittstelle (100) für den Start des Motors betätigt wird, wenn ein Verwendungszustand als letzter Zustand im Speicher (90) gespeichert ist, wobei das Modul zwischen dem einen und dem anderen des ersten und des zweiten Betriebszustandes (E4, E5) übergehen kann, wenn seine zugeordnete Schnittstelle (30, 40, 50, 60, 80) betätigt wird.

9. Vorrichtung zum Steuern eines Multimediasystems (1) in einem Kraftfahrzeug für die Ausführung des Steuerverfahrens nach einem der vorangehenden Ansprüche, wobei das Multimediasystem (1) mindestens ein Modul (3, 4, 5, 6, 8) zur Ausführung einer Multimediafunktion umfasst, das mindestens einen Betriebszustand (E4, E5) aufweist, der durch eine Einwirkung des Benutzers an einer Schnittstelle (30, 40, 50, 60, 80, 100) gesteuert wird, mit Mitteln (91) zur Detektion eines Öffnungs- oder Entriegelungsereignisses des Fahrzeugs, einer Einheit (110) zur Steuerung des Multimediasystems (1), die mit den Detektionsmitteln (91) verbunden ist und Mittel zum Steuern des Moduls (3, 4, 5, 6, 8) umfasst, um es vorübergehend in den Vorstartzustand (E7) zu versetzen, wenn die Detektionsmittel (91) ein Öffnungs- oder Entriegelungsereignis detektiert haben, und Mitteln zum Steuern der Ausführung durch das Modul (3, 4, 5, 6, 8), dass mindestens eine vorgeschriebene Aufgabe, die keine Einwirkung des Benutzers erfordert, gestartet wird, wobei Mittel vorgesehen sind, um das Modul (3, 4, 5, 6, 8) durch Einwirkung an der Schnittstelle (30, 40, 50, 60, 80, 100) vom Vorstartzustand in den Betriebszustand (E4, E5) zu versetzen, **dadurch gekennzeichnet, dass** das Multimediasystem mindestens eine Vorrichtung (2, 7) zur Darstellung von Informationen in einer für den Benutzer erkennbaren Form umfasst, in der ein Betriebszustand (E5) des Moduls vorgesehen ist, der das Senden von Informationen von diesem Modul an die Vorrichtung (2, 7) für ihre Darstellung für den Benutzer umfasst, wobei der Vorstartzustand (E7) mindestens eine Aufgabe zur Aktivierung des Moduls (3, 4, 5, 6, 8) mit Inaktivierung der Vorrichtung (2, 7) zur Darstellung von Informationen umfasst, so dass sie keine Informationen darstellt, die vom Modul stammen.
